# EUROPÄISCHE PATENTSCHRIFT

(11) **EP 2 994 326 B1**
(45) Veröffentlichungstag und Bekanntmachung des Hinweises auf die Patenterteilung: **04.07.2018**
(21) Anmeldenummer: 14728824.5
(22) Anmeldetag: 06.05.2014
(51) Int. Cl.: B60H 1/00, F25B 45/00, B01D 5/00

(54) **SERVICE-GERÄT ZUM WARTEN VON FAHRZEUGKLIMAANLAGEN SOWIE VERFAHREN ZUM BETREIBEN EINES SOLCHEN SERVICE-GERÄTES**
SERVICE DEVICE FOR THE MAINTENANCE OF VEHICLE AIR-CONDITIONING SYSTEMS AND METHOD FOR OPERATING A SERVICE DEVICE OF THIS TYPE
APPAREIL DE MAINTENANCE DESTINÉ À EFFECTUER L'ENTRETIEN DE SYSTÈMES DE CLIMATISATION DE VÉHICULE, ET PROCÉDÉ PERMETTANT DE FAIRE FONCTIONNER UN TEL APPAREIL DE MAINTENANCE

(30) Priorität: 06.05.2013 DE 202013004158 U
(43) Veröffentlichungstag der Anmeldung: 16.03.2016
(73) Patentinhaber: Dometic Sweden AB, 171 54 Solna (SE)
(72) Erfinder: ESCH, Franz-Josef, 48477 Hörstel (DE)
(74) Vertreter: Grosse Schumacher Knauer von Hirschhausen
(86) Internationale Anmeldenummer: PCT/EP2014/001199
(87) Internationale Veröffentlichungsnummer: WO 2014/180559

(56) Entgegenhaltungen:
- US-A- 5 167 126
- US-A- 5 582 019
- US-A- 5 598 714

## Beschreibung

### GEBIET DER ERFINDUNG

Die Erfindung betrifft ein Service-Gerät zum Warten von Fahrzeugklimaanlagen sowie ein Verfahren zum Betreiben eines solchen Service-Gerätes gemäß Oberbegriff von Ansprüchen 1 bzw. 8. Demnach umfasst ein gattungssgemäßes Service-Gerät einen Kältemittelvorrat und eine erste, den Kältemittelvorrat speisende Trennstufe zum Trennen von Kältemittel und etwaigen nicht-kondensierbaren Gasen von Kompressoröl und ggf. Additiven. Hierdurch kann aus einem Kältemittel/nicht-kondensierbare-Gase/Kompressoröl-Gemisch einer Fahrzeugklimaanlage das Kompressoröl sowie flüssige Additive des Gemischs in der ersten Trennstufe des Service-Geräts abgeschieden sowie das vom Kompressoröl gereinigte Kältemittel sowie etwaige nicht-kondensierbare-Gase in dem Kältemittelvorrat gesammelt werden. Die Trennstufe trennt also im Wesentlichen Kompressoröl von dem Kältemittel/nicht-kondensierbare-Gasen. Durch Ausgestaltung des Ölseparators als Wärmetauscher kann das Kältemittel/Kompressoröl-Gemisch so erwärmt werden, dass das Kältemittel dabei völlig verdampft und keine flüssigen Bestandteile in den nachgeschalteten Kompressor gelangen. Das nach wie vor flüssige, in der Regel verunreinigte Kompressoröl wird gesondert gesammelt.

### TECHNOLOGISCHER HINTERGRUND

Ein gattungsgemäßes Service-Gerät zum Warten von Fahrzeugklimaanlagen ist aus der WO 2011/063961 A1 derselben Anmelderin, angemeldet unter dem Aktenzeichen PCT/EP2010/007155 am 25.November 2010 und veröffentlicht am 03. Juni 2011, die hiermit durch Bezugnahme in die vorliegende Offenbarung vollständig mit einbezogen wird, bekannt.

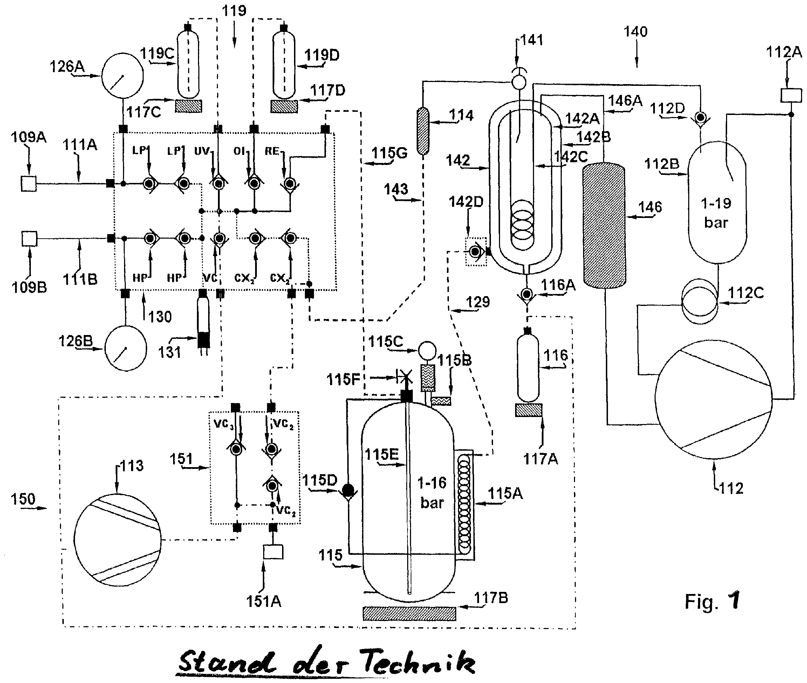

Aus dem Blockschaltbild nach Figur 1 ergibt sich der Grundaufbau eines Service-Gerätes für Fahrzeugklimaanlagen wie es die WO 2011/063961 A1 bevorzugt. Demnach sind Service-Anschlussverbinder 109A, 109B zum Anschluss an den Kühlmittel-/Kompressionskreislauf einer Fahrzeugklimaanlage (hier nicht dargestellt) vorgesehen, um diese zu warten, insbesondere zu entleeren und wiederzubefüllen. Über Druckschläuche 111A, 111B besteht eine fluidische Verbindung zu einem ersten Umschalt-Ventilblock 130, dessen Funktion weiter unten erklärt wird. Der Umschalt-Ventilblock 130 ist zum Einen mit einer rechts im Bild dargestellten Trennstufe 140, die weiter unten erklärt wird, und zum Anderen (links unten im Bild) mit einer Vakuumeinheit 150, die ebenfalls weiter unten erklärt werden wird, fluidisch verbunden. Ein Niederdruckmanometer 126A und ein Hochdruckmanometer 126B am Umschalt-Ventilblock 130 dienen unter anderem der Zustands- und Funktionskontrolle des Kühlmittel-Kompressorölkreislaufes der Fahrzeugklimaanlage. Des Weiteren ist der Umschalt-Ventilblock 130 an ein Wiederauffüllsystem 119 für Kompressoröl und Additive fluidisch angeschlossen, mit Wiegeeinrichtungen 117C und 117D für Spender 119C, 119D, zum Beispiel für ein Lecksuchadditiv respektive für Frischöl. Der Systemdruck innerhalb des Umschalt-Ventilblocks 130, der nach beginnender Entleerung des Fluidkreislaufes für die Systemsteuerung, die weiter unten erklärt wird, von Bedeutung ist, wird über einen mit einer Sammelleitung des Umschalt-Ventilblocks 130 verbundenen Drucksensor 131 überwacht, so dass der Anlagendruck, insbesondere der Kältemitteldruck der Fahrzeugklimaanlage überwacht wird, so dass unter anderem die nachfolgend erläuterten Kreislaufsysteme (Trennstufe 140 und Vakuumeinheit 150 bzw. zugehörige Ventilschaltungen) gesteuert werden können. Innerhalb des Umschalt-Ventilblocks 130 sind die dem Kreislauf der Trennstufe 140 zuzuordnenden Leitungen punktiert dargestellt. Demgegenüber sind die der Vakuumeinheit 150 zuzuordnenden Leitungen strichpunktiert dargestellt, um nachfolgend die Arbeitsphasen des Systems besser unterscheiden zu können.

Die Funktionsweise der Trennstufe 140 ist die Folgende: Nach Anschließen der Service-Anschlussverbinder 109A, 109B an die entsprechenden Ports der Fahrzeugklimaanlage und Freigabe der entsprechenden Ventile LP, HP, CX₂ des Umschalt-Ventilblocks 130, steht der Systemdruck der Fahrzeugklimaanlage zur Verfügung, um einen ersten Teil des Inhalts des Kältemittelkompressorölkreislaufes der Fahrzeugklimaanlage in die Trennstufe 140 zu überführen. Dieser Systemdruck beträgt bei 0°C bereits etwa 3 bar absolut und liegt bei etwa 20°C bereits in einer Größenordnung von 6 bar absolut, so dass die Förderung von Kältemittel-Kompressorölgemisch in die Trennstufe140 zunächst sogar selbsttätig erfolgt. Im Übrigen wird diese Förderung durch Betreiben des Verdichters 112, wie weiter unten erläutert, unterstützt und später bei abfallendem Systemdruck weiter in Gang gehalten. Von dem Umschalt-Ventilblock 130 gelangt das Kältemittelkompressorölgemisch über einen Grobfilter 114 und ein auf etwa 3,5 bar absolut eingestelltes Konstantdruckventil 141 in einen Doppelmantelwärmeaustauscher 142, und zwar in dessen Innenbehälter 142A. Dort werden die flüchtigen Komponenten verdampft und die Gasphase gelangt über eine Leitung 146A in einen Gastrockner 146 und von dort in den Verdichter 112.

Der Doppelmantelwärmeaustauscher 142 dient gleichzeitig als Separator für flüssige Bestandteile des Kältemittel-Kompressorölgemisches, hier handelt es sich im Kern um das Kompressoröl, gegebenenfalls enthaltene Additive sowie im Kompressoröl noch gebundene Restmengen des Kältemittels. Diese Flüssigphase wird über ein Ölablassventil 116A einem Altölbehälter 116 zugeführt. Die anfallenden Mengen können über eine Wägeeinrichtung 117A, welche den Behälter mitwiegt, registriert werden.

Der Verdichter 112 sorgt dafür, dass das Kältemittel an seiner Ausgangsseite auf einen Druck von bis zu z.B. 19 bar absolut komprimiert wird. Ein Kompressornotausventil 112A begrenzt den Druck in der Regel auf 19 bar. Da das Schmieröl des Verdichters auch in das komprimierte Kältemittel gelangt, wird dieses in einem Ölseparator 112B abgetrennt und über ein Kapillarrohr 112C, das wie eine Druckdrossel wirkt, der Schmierung des Verdichters 112 wieder zugeführt. Über ein Magnetventil 112D gelangt das komprimierte, getrocknete und von Kompressoröl sowie Additiven befreite Kältemittel in eine Heizwendel 142C, die sich im Gasraum des Innenbehälters 142A des Doppelmantelwärmeaustauschers 142 befindet. Hierdurch kann die im komprimierten Kältemittel enthaltene Kompressionswärme abgegeben werden, um auf der Kaltseite das aus der Fahrzeugklimaanlage frisch ankommende Kältemittel/Kompressorölgemisch so weit wie möglich zu verdampfen. Aus der Heizwendel 142C gelangt das gereinigte (recycelte) Kältemittel zunächst in den Außenmantelbereich (Außenbehälter 142B) des Doppelmantelwärmeaustauschers 142 und von dort über einen Ventilblock 142D und einen Verbindungsschlauch 129 zum Kältemittelvorrat 115 (Vorratsbehälter). Der Vorratsbehälter wird samt Inhalt von einer Wägeeinrichtung 117B gewogen. Der Vorratsbehälter trägt auch einen Kältemittelverflüssiger 115A, der vorteilhafter Weise mit gewogen wird und in dem das unter Kompressionsdruck stehende Kältemittel kondensiert wird, um in flüssiger Form in den Kältemittelvorrat 115 zu gelangen. Sowohl der Separator 112B als auch der Kältemittelvorrat+ 115 sind also so genannte Druckbehälter ausgelegt. Der Druck im Kältemittelvorrat 115 wird über ein Ventil 115B gegen Überdruck gesichert, denn die sich oberhalb des Flüssigkeitsspiegels ausbildende Gasphase nicht kondensierbarer Gase muss aus Sicherheitsgründen ab einem bestimmten Überdruck von z.B. 16 bar geregelt abgelassen werden. Dies kann auch nicht automatisch über eine Handhabe 115C durch eine Bedienperson erfolgen.

Das flüssige Kältemittel gelangt über ein Rückschlagventil 115D und ein Steigrohr 115E in den Flüssigbereich des Kältemittelvorrat 115. Um die Fahrzeugklimaanlage mit Kältemittel wiederbefüllen zu können, gelangt flüssiges Kältemittel über das Steigrohr 115E, ein Ventil 115F und eine Verbindungsleitung 115G zurück in den Umschalt-Ventilblock 130.

Sobald die Fahrzeugklimaanlage soweit entleert ist, dass der Verdichter 112 auf seiner Niederdruckseite nicht mehr genügend Kältemittel-/Kompressorölgemisch ansaugen kann, was z.B. bei einem Druck 0,7 bar absolut der Fall sein kann, wird die Vakuumeinheit 150 durch Betätigen der entsprechenden Ventile in Gang gesetzt. So werden weitere Gasbestandteile aus dem Fluidkreislauf der Fahrzeugklimaanlage über die Sammelleitung des Umschalt-Ventilblocks 130 durch die Vakuumpumpe 113 angesaugt. Von der Ausgangsseite der Vakuumpumpe 113 gelangt dieses Gas oder Gasgemisch über einen (zweiten) Umschalt-Ventilblock 151 und Magnetventile VC2 zurück zum Umschalt-Ventilblock 130 und von dort in die Verbindungsleitung 143, die den Umschalt-Ventilblock 130 an die Trennstufe 140 fluidisch ankoppelt. Die von der Vakuumpumpe 113 geförderten Gasmengen aus der Fahrzeugklimaanlage werden nun in der Trennstufe 140 genauso behandelt, wie die bei Beginn des Entleerungsprozesses selbstständig aus der Fahrzeugklimaanlage austretenden Mengen an Kältemittel-/Kompressorölgemisch. Der Unterschied zu der ersten Phase, hier als Abströmphase bezeichnet, besteht darin, dass aus der Fahrzeugklimaanlage aufgrund der vorangehenden durch den Verdichter 112 unterstützten Abströmphase keine flüssigen Bestandteile, also im wesentlichen gasförmiges Kältemittel oder ggf. Luft aus der Fahrzeugklimaanlage angesaugt werden. Dabei sind zunächst relativ große Gasmengen zu bewältigen, während gegen Ende der zweiten Phase, hier als Evakuierphase bezeichnet, die Gasmengen deutlich geringer werden. Bei einem Eingangsdruck von etwa 1mbar oder nach Ablauf einer fest voreingestellten Prozesszeit wird der Evakuierprozess beendet. Der von der Vakuumpumpe 113 erzeugte Gasdruck auf ihrer Ausgangsseite sollte eine Größenordnung von 2 bar absolut nicht überschreiten, um die Vakuumpumpe 113 nicht zu schädigen. Zur Druckkontrolle ist dem der Vakuumpumpe nachgeschaltete Umschalt-Ventilblock 151 ein Druckschalter 151A zugeordnet, mit dessen Hilfe, die Vakuumpumpe 113 bei Überschreiten eines Ausgangsdruckes von z.B. 2 bar abschaltet, bis der Ausgangsdruck wieder entsprechend abgesunken ist, so dass die Vakuumpumpe 113 wieder zugeschaltet werden kann.

Da das Service-Gerät nicht nur für das Absaugen und Wiederbefüllen der Fahrzeugklimaanlage im normalen Wartungsbetrieb genutzt wird, sondern auch für Reparaturfälle an Klimaanlagen, z.B. Komponentenaustausch, ist der der Vakuumpumpe 113 nachgeschaltete Umschalt-Ventilblock 151 mit einem Ablassventil VC₃ ausgestattet, das z.B. in die Atmosphäre führen kann. Wenn also aus der reparierten Fahrzeugklimaanlage für nachfolgendes Wiederbefüllen lediglich Luft abgesaugt wird, gelangt diese nicht in die Trennstufe140.

Demnach sieht die WO 20011/063961 A1 unter anderem vor, den Druck im Kältemittelvorrat 115 zu überwachen und die sich oberhalb des Flüssigkeitsspiegels ausbildende Gasphase nicht kondensierter und nicht kondensierbarer Gase aus Sicherheitsgründen ab einem bestimmten Überdruck von z.B. 16 bar geregelt abzulassen. In einem solchen Vorratsbehälter liegt das abgetrennte Kältemittel in der Regel in verflüssigter Form vor und die unter den vorherrschenden Druck- und Temperaturbedingungen nicht kondensierbaren Gase oberhalb des Kältemittel-Flüssigkeitsspiegels weisen auch gewisse Kältemittelmengen auf. Wenn in dem Vorratsbehälter auf Grund der herrschenden Druck- und Temperaturverhältnisse nennenswerte Restmengen an Kältemitteln in der Gasphase anfallen, ist es ggf. vorgesehen, diese über die Vakuumpumpe 113 oder auf Grund des Innendruckes Kältemittelvorratsbehälter erneut der Trennstufe zuzuführen. Gleiches kann mit den nicht kondensierten Gasbestandteilen vorgenommen werden, die in der Trennstufe in dem dem Ölseparator nachgeschalteten Altölbehälter 116 in Gasform anfallen oder mit den in dem Kompressoröl etwa noch gelösten Kältemittelrestmengen.

Aus der US 5,598,714 ist ein Servicegerät zum Warten von Fahrzeugklimaanlagen gemäß Oberbegriff des Anspruchs 1 bekannt, bei dem eine Trennstufe zum Trennen von einerseits Kältemittel und nicht-kondensierbaren Gasen von andererseits Kompressoröl einen Kältemittelvorrat speist. Eine weitere Trennstufe zum Trennen von Kältemittel einerseits von nicht-kondensierbaren Gasen andererseits wird bei der bekannten Vorrichtung durch die durch die Gasphase des Kältemittelvorrats gespeist und umfasst einen ungekühlten Zwischenbehälter. Eine Prallplatte im Zwischenbehälter assistiert bei der Trennung dergestalt, dass Kühlmittel sich am Boden des Zwischenbehälters absetzt und nicht-kondensierbares Gas im Behälter nach oben steigt.

Bei der aus der US 5,167,126 bekannten Vorrichtung sind an einem Zwischenbehälter Mittel zum Heizen vorgesehen.

Aus der US 5,582,019 ist ebenfalls ein Servicegerät zum Warten von Fahrzeugklimaanlagen bekannt, bei dem ein Zwischenbehälter für das Kältemittel nicht gekühlt wird.

### DARSTELLUNG DER ERFINDUNG

Es wurde gefunden, dass der Anteil von Kältemittel in dem Gasvolumen oberhalb des Flüssigkeitsspiegels des Kältemittelvorrates in einem gattungsgemäßen Servicegerät für Fahrzeugklimaanlagen so beträchtlich sein kann, dass es aus Kosten- und/oder Sicherheitsgründen wünschenswert oder gar erforderlich ist, diese Kältemittelrestmengen nicht in die Umgebungsatmosphäre zu entlassen. Um dies zu erreichen, ist der Vorschlag, die aus dem Kältemittelvorrat gezielt abgelassenen nicht kondensierbaren Gase der Trennstufe wieder zuzuführen grundsätzlich zur Problemlösung geeignet. Eine der Schwierigkeiten besteht allerdings darin, dass auf diesem Wege sämtliche nicht kondensierbaren Gase, insbesondere Luft, im Kreislauf durch die Trennstufe gefahren werden. Es fehlt an einer Senke für nicht kondensierbare Gase.

Dieses Problem löst die in den Ansprüchen 1 und 8 wiedergegebene Erfindung. Bei einem erfindungsgemäßen Verfahren zum Warten einer Fahrzeugklimaanlage, insbesondere mit einem Service-Gerät nach Anspruch 1, wird - wie bekannt - ein Kältemittel/nicht-kondensierbare-Gase/Kompressoröl-Gemisch der Fahrzeugklimaanlage in ein Service-Gerät geleitet, das Kompressoröl des Gemischs in einer ersten Trennstufe des Service-Geräts abgeschieden und das vom Kompressoröl gereinigte Kältemittel/nicht-kondensierbare-Gase-Gemisch in einem Kältemittelvorrat gesammelt. Erfindungsgemäß wird das Kältemittel/nicht-kondensierbare-Gase-Gemisch aus dem Kältemittelvorrat in einen Zwischenbehälter geleitet und das gasförmige Kältemittel im Zwischenbehälter bis zur Kondensation abgekühlt. Dabei kann die vorliegende Erfindung gemäß einem ersten Aspekt vorsehen, die aus der Gasphase des Kältemittelvorratsbehälters bei entsprechenden Druckverhältnissen von Zeit zu Zeit abgelassenen Gasvolumina in einer gesonderten, zweiten Trennstufe durch Abkühlen in einem Zwischenbehälter für nicht kondensierte Gase in eine nicht kondensierbare Gase umfassende Gasphase und eine kondensiertes Kältemittel umfassende Flüssigphase, vorzugsweise batchweise, zu trennen. Die Gasphase im Zwischenbehälter kann nachfolgend bis auf einen geringen Restdruck, der vorzugsweise oberhalb der Umgebungsatmosphäre liegt, z. B. an die Umgebung abzulassen. Die in dem Zwischenbehälter anfallende Flüssigphase kann dem Kältemittelkreislauf, vorzugsweise dem Kältemittelvorrat, in geeigneter Weise wieder zugeführt werden. Erfindungsgemäß weist das Service-Gerät also eine zweite, von den Kältemittelvorrat, insbesondere von dessen Gasphase, gespeiste Trennstufe mit einem Zwischenbehälter zum Trennen von Kältemittel und nicht-kondensierbaren Gasen auf. Die zweite Trennstufe hat im Wesentlichen die Aufgabe, das kondensierbare Kältemittel von den nicht-kondensierbaren Gasen räumlich zu trennen.

Es hat sich gezeigt, dass auf dem vorbeschriebenen Wege eine effiziente "Senke" für nicht kondensierbare Gase geschaffen wird, welche bedeutend weniger Reste an noch gasförmigem Kältemittel enthält, als die Gasphase im Kältemittelvorrat des Servicegerätes für Fahrzeugklimaanlagen.

Es ist nun auf verschiedene Weise möglich, die Erfindung auszuführen: So kann es vorteilhaft sein, die Flüssigphase aus dem Zwischenbehälter für nicht kondensierte Gase, das heißt, das "auskondensierte" Kältemittel, im Anschluss an ein völliges oder teilweises Ablassen der Gasatmosphäre wieder zu verdampfen, um es auf diese Weise aus dem Zwischenbehälter in einfacher Weise i.W. gasförmig ablassen, absaugen oder austreiben zu können.

In jedem Fall ist es von Vorteil, die in dem Zwischenbehälter, vorzugsweise batchweise, anfallenden Mengen an Kältemittel dem Kältemittelvorrat in kondensierter Form wieder zuzuführen. Hierzu sind im Stand der Technik gemäß WO 2011/063961 A1 beschriebenen Vorrichtungsbestandteile einer Trennstufe für Kältemittel/Kompressoröl-Gemisch besonders geeignet. Es wird aber in der Regel nicht erforderlich, zu diesem Zweck die in einem solchen Servicegerät für Fahrzeugklimaanlagen wahlweise vorgesehene Vakuumpumpe einzusetzen. Vorzugsweise wird deren Einsatz unterbleiben.

Das Service-Gerät zum Warten von Fahrzeugklimaanlagen, insbesondere zum Austausch eines Kältemittel/Kompressoröl-Gemisches, dient zunächst dem Austausch des Kältemittel/Kompressoröl-Gemischs, aber auch der Reparatur von Fahrzeugklimaanlagen. Beides, Austausch und Reparatur, wird mit dem Begriff "Wartung" zusammen gefasst.

Unter "nicht-kondensierbaren Gasen" sind solche Gase zu verstehen, welche nur unter extremen Bedingungen, also extremen Drücken und/oder Temperaturen, kondensieren und i.d.R. unerwünschterweise in den Kältemittel/Kompressoröl-Kreislauf der Fahrzeugklimaanlage eindringen. Dies ist im Besonderen Luft, welche u.a. die Effizienz der Klimaanlage deutlich verringern kann.

Ein Verdichter kann verwendet werden, um einerseits den für die Verflüssigung von Kältemittel notwendigen Druck zu erzielen. Kompressionswärme aus dem verdichteten Gasgemischs kann in einem Wärmetauscher genutzt werden.

Der Kältemittelvorrat kann frisches, vom Hersteller geliefertes Kältemittel, aber auch oder ausschließlich wiederaufbereitetes Kältemittel aufnehmen; es wird in einem Kältemittelvorratsbehälter gesammelt und bei Bedarf an eine Fahrzeugklimaanlage abgegeben. In dem Kältemittelvorratsbehälter bildet sich in der Regel eine flüssige und eine gasförmige Phase aus. Die flüssige Phase umfasst allenfalls geringfügig verunreinigtes Kältemittel, wohingegen die gasförmige Phase neben nicht-kondensierbaren Gasen auch gasförmiges Kältemittel umfassen kann, dass in Abhängigkeit von Druck und Temperatur in einem jeweiligen Gleichgewicht mit seiner Flüssigphase steht.

Es ist nun auf verschiedene Weise möglich, das Auskondensieren der Kältemittelanteile in dem Zwischenbehälter für nicht kondensierte/ nicht kondensierbare Gase zu bewerkstelligen. Vorzugsweise wird hierzu flüssiges Kältemittel aus dem Kältemittelvorrat in einem Verdampfer wie einer Verdampferschlange verdampft, die sich an oder besonders bevorzugt innerhalb des Zwischenbehälters befindet. Das dabei verdampfte Kältemittel kann nachfolgend, insbesondere über die Trennstufe für Kältemittel/Kompressoröl-Gemisch wieder verflüssigt und rückstandsfrei dem Kältemittelvorratsbehälter in flüssiger Form wieder zugeführt werden.

Vorzugsweise weist der Zwischenbehälter Mittel zum Kühlen zur Kondensation des Kältemittels auf. Das Kältemittel kondensiert und sammelt sich am Boden des Zwischenbehälters, wohingegen die nicht kondensierbaren Gase sich oberhalb des kondensierten Kältemittels sammeln. Der Bereich, in dem sich das flüssige Kältemittel im Zwischenbehälter typischerweise befindet, kann als Flüssigzone, und der typische Bereich der nicht-kondensierten Gase als Gaszone bezeichnet werden.

Der Kältemittelvorrat kann einen Ausgang für das Kältemittel/nicht-kondensierbare-Gase-Gemisch aufweisen. Dieser Ausgang dient der Weiterleitung des Kältemittel/nicht-kondensierbare-Gase-Gemischs an die Trennstufe, also insbesondere an den Zwischenbehälter. Entsprechend kann der Zwischenbehälter einen Eingang für das Kältemittel/nicht-kondensierbare-Gase-Gemisch aus dem Kältemittelvorrat umfassen. Dadurch entsteht eine Verbindung zwischen Kältemittelvorrat, insbesondere zwischen der gasförmigen Phase des Kältemittelvorrats, und Zwischenbehälter.

Wenn der Zwischenbehälter einen ersten, insbesondere zur Umgebungsatmosphäre führenden Ausgang für die nicht-kondensierbaren Gase umfasst, kann auf diese Weise eine Senke für die nicht-kondensierbaren Gase geschaffen werden. Der erste Ausgang kann in der Gaszone, vorzugsweise im oberen Bereich, und besonders vorzugsweise am oberen Ende des Zwischenbehälters angeordnet sein. Die nichtkondensierbaren Gase können so, falls gewünscht, zuerst aus dem Zwischenbehälter entfernt werden. Dieses Entfernen kann mittels eines Überdrucks im Zwischenbehälter, aber auch mit einem außerhalb des Zwischenbehälters erzeugten Unterdruck erreicht werden.

Wenn der Zwischenbehälter einen zweiten, für das Kältemittel vorgesehenen Ausgang umfasst, kann das kondensierte Kältemittel z.B. unmittelbar in den Kältemittelvorrat zurück geleitet werden oder auch direkt in die Fahrzeugklimaanlage und/oder die erste Trennstufe und/oder einen zweiten Kältemittelvorrat. Der zweite Ausgang kann in der Flüssigzone, vorzugsweise im unteren Bereich, und besonders vorzugsweise am unteren Ende des Zwischenbehälters angeordnet sein. Das Kältemittel kann so, auch wenn bereits die nicht-kondensierbaren Gase abgelassen wurden und ein Druckausgleich, z.B. mit der Umgebung, herbeigeführt wurde, aufgrund der Schwerkraft aus dem Zwischenbehälter entfernt werden. Je weiter unten sich der Ausgang befindet, umso vollständiger kann der Zwischenbehälter geleert werden und umso effektiver ist der Trennvorgang. Falls sich die nichtkondensierbaren Gase noch im Zwischenbehälter befinden und ein Überdruck herrscht, kann beispielsweise ein Sensor erkennen, wann das Kältemittel vollständig aus dem Zwischenbehälter gelaufen oder ausgetrieben ist und dann einen Ventilschluss herbeiführen. Somit kann die Entleerungsreihenfolge auch gewechselt werden.

Wenn der Kältemittelvorrat einen Ausgang für flüssiges Kältemittel aus dem Kältemittelvorrat aufweist, kann das flüssige Kältemittel in einen Eingang einer des Zwischenbehälters, vorzugsweise in eine Verdampferschlange, fließen. Das kalte, flüssige Kältemittel kühlt die Verdampferschlange, welche sich vorzugsweise innerhalb des Zwischenbehälter befindet und so das gasförmige Kältemittel/nicht-kondensierbare-Gase-Gemisch kühlt. In der Folge kondensiert das aus der Gasphase des Kältemittelvorrats in den Zwischenbehälter übergeleitete Kältemittel, während die Anteile an nichtkondensierbaren Gasen gasförmig bleiben.

Der Ausgang der Verdampferschlange kann mit dem zweiten Ausgang des Zwischenbehälters verbindbar oder verbunden sein. Auf diese Weise kann das zum Kühlen genutzte Kältemittel und das im Zwischenbehälter auskondensierte Kältemittel gemeinsam der Fahrzeugklimaanlage und/oder dem Kältemittelvorrat und/oder der ersten Trennstufe und/oder dem zweiten Kältemittelvorrat zugeführt werden.

Vorzugsweise sind der Zwischenbehälter und/oder der Kältemittelvorrat und/oder die Verdampferschlange und/oder zugeordnete Leitungen und/oder zugeordnete Ventile für eine batchweise Befüllung und Entleerung des Zwischenbehälters vorgesehen oder ausgelegt. Dies bedingt unter Anderem eine größere Prozesseffizienz.

Wenn der für die Gasphase vorgesehene (erste) Ausgang des Zwischenbehälters steuerbar ist und/oder einen Öffnungsschwelldruck von 1,01bar bis 2bar, vorzugsweise von 1,03bar bis 1,3 bar und besonders vorzugsweise von 1,05 bar bis 1,15 bar aufweist, werden keine weiteren Gerätekomponenten, beispielsweise eine Unterdruckpumpe, benötigt, um die nicht-kondensierbaren Gase aus dem Zwischenbehälter hinaus zu leiten. Der Ausgang kann manuell oder automatisch geöffnet werden und bleibt, vorzugsweise, bis zum Erreichen eines Schwelldrucks geöffnet. Unter dem Begriff "ein" und in allen seinen grammatikalisch möglichen Fällen ist regelmäßig "wenigstens ein" zu verstehen. Falls "genau ein" gemeint ist, wird dies jeweils ausdrücklich klargestellt. Dies gilt ebenso für alle weiteren Stückzahlen, so dass unter z.B. "vier Stück" regelmäßig "wenigstens vier Stück" verstanden wird, sofern nicht ausdrücklich eingeschränkt wird. Im Falle von technischnaturwissenschaftlichen Größen (Temperatur, Druck, Kraft, Energie, Stromstärke, Stoffmenge usw.) hingegen sind Zahlenangeben regelmäßig als Beispiel einer in dem Anwendungsgebiet bekannten Spanne zu verstehen, sofern nicht ausdrücklich davon abgewichen wird.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel eines Service-Gerätes für Fahrzeugklimaanlagen dargestellt ist.

### DETAILLIERTE BESCHREIBUNG VON AUSFÜHRUNGSBEISPIELEN

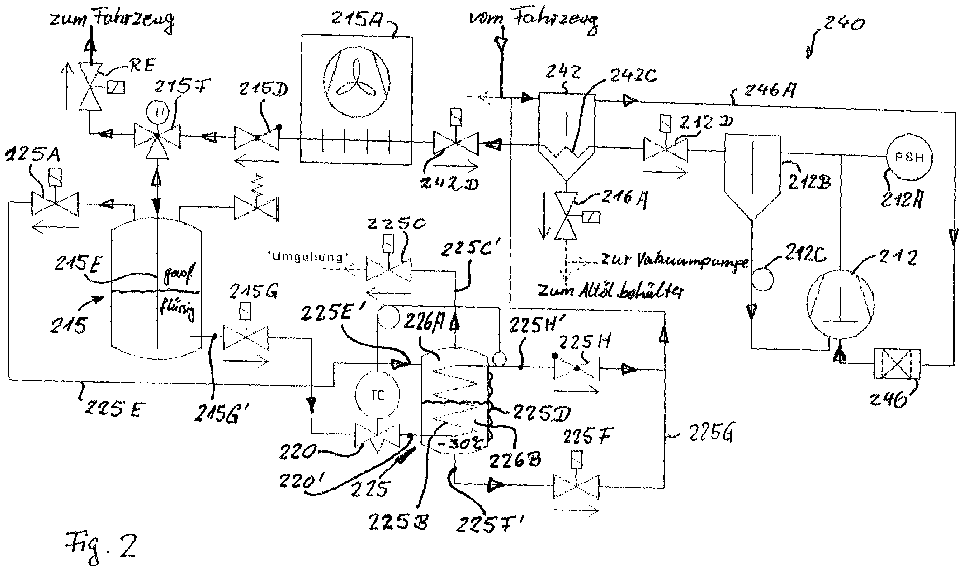

Die einzige Figur (Figur 2) zeigt ausschnittsweise ein Blockschaltbild derjenigen Bestandteile eines Klimaservicegerätes für Fahrzeugklimaanlagen welche zum Zwecke der Erfindung wahlweise oder vorzugsweise genutzt werden. Im Übrigen kann das Servicegerät für Fahrzeugklimaanlagen weitere Bestandteile enthalten wie sie u.a. in den folgenden Schutzrechten der Anmelderin Verwendung finden: WO 2007/085480 A1, WO 2011/063961 A1, WO 2012/034695 A1, DE 102009/054436 A1, DE 202006/001374 U1, DE 202006/001376 U1, DE 202008/003123 U1.

In dem Blockschaltbild nach Figur 2 ist links unten ein Kältemittelvorrat 215 für wiederaufbereitetes Kältemittel ersichtlich. Es handelt sich um einen Druckbehälter von z.B. 16 Litern Fassungsvermögen, in dem sich unterhalb eines Flüssigkeitsspiegels im wesentlichen reines Kältemittel befindet, während in dem Gasraum darüber neben nicht kondensierbaren Gasen, wie Luft, sich auch gasförmige Kältemittelbestandteile in einer von Temperatur und Druck abhängigen Menge befinden. Der Kältemittelvorrat 215 kann, wie bekannt aber nicht eigens dargestellt, insgesamt wägbar sein. Ein dem Kältemittel vorgeschalteter Kältemittelverflüssiger 215A kann sich, wie bekannt aber nicht eigens dargestellt, unmittelbar an der Wandung des Kältemittelvorrats 215 befinden und mitgewogen werden oder z.B., wie in der Zeichnung dargestellt, an gesonderter Stelle sich befinden. Aufbereitetes, das heißt von Kompressoröl und etwaigem Additiv in einer aus der WO2011/063961 A1 bekannten Trennstufe 240 im wesentlichen befreites Kältemittel gelangt (nach Verdichtung durch einen Verdichter 212, Abtrennung von Kompressoröl des Verdichters in einem Ölseperator 212B und Abgabe eines Teils der Kompressionswärme in einer Heizwendel 242C eines Wärmeaustauschers 242) danach über schaltbare Ventile 212D und 242D in den Kältemittelverflüssiger 215A. In diesem wird das auf beispielsweise bis 15 bar komprimierte Kältemittel unter Wärmeabgabe kondensiert, um nachfolgend (in flüssiger Form) über ein Rückschlagventil 215D und ein Mehrwegeventil 215F sowie ein Tauchrohr, das auch als Steigrohr 215E dient, in den unteren Aufnahmebereich des Kältemittelvorrates 215 zu gelangen.

Beim Befüllen einer Fahrzeugklimaanlage gelangt das flüssige Kältemittel aus dem Kältemittelvorrat 215 über das Steigrohr 215E, das Mehrwegeventil 215F sowie weitere Schaltventile, wie das Ventil RE eines in der Zeichnung nicht dargestellten Ventilumschaltblockes, in dosierter Form in die Fahrzeugklimaanlage.

Wenn, (in der Regel von dem Hochdruckserviceanschluß der Fahrzeugklimaanlage ausgehend) Kältemittel/Kompressoröl-Gemisch (gegebenenfalls unter Zwischenschaltung einer - in Fig.2 nicht dargestellten Vakuumpumpe) mit Hilfe des Verdichters 212 in die Trennstufe 240 gefördert wird, gelangt dieses (gegebenenfalls nach Passieren eines in der Zeichnung nicht dargestellten Grobfilters) in den Wärmeaustauscher 242, der als Ölseperator dient. In diesem Wärmeaustauscher 242 werden noch nicht verdampfte Kältemittelbestandteile mittels der Heizwendel 242C verdampft und über eine Leitung 246A einem Gastrockner 246 zugeführt. Das so von flüssigen Bestandteilen befreite Kältemittel gelangt nachfolgend in den Verdichter 212, der über ein Kompressornotausventil 212A gegen Überlast geschützt wird. Das für den Verdichter 212 benötigte Kompressoröl gelangt mit in das auf z.B. auf 1 bis 19 bar komprimierte Kältemittel und wird im Kreislauf über den Ölseperator 212B und ein Kapilarrohr 212C dem Verdichter 212 im Kreislauf wieder zugeführt. In den Wärmeaustauscher 242 fallen in dessen Sumpfbereich altes Kompressoröl aus der Fahrzeugklimaanlage sowie etwaige Additive in flüssiger Form an und können über ein schaltbares Ölablassventil 216A in einen (in der Zeichnung nicht dargestellten) Altölbehälter gelangen. In dem Altölbehälter etwa sich sammelnde gasförmige Bestandteile können von der nicht dargestellten Vakuumpumpe von Zeit zu Zeit abgesaugt und der Trennstufe 240 erneut zugeführt werden. - Insoweit ist das Servicegerät für Fahrzeugklimaanlagen unter anderem aus der WO 2011/063961 A1 bekannt.

Um das in dem Kältemittelvorratsbehälter 215 vorhandene Gasvolumen, das zu großen Teilen aus nicht kondensierbaren Gasen (NKG), insbesondere Luft, sowie einem druck-und temperaturabhängigen Anteil von gasförmigem Kältemittel besteht, von den nicht kondensierbaren Gasen weitestgehend befreien können, so dass diese an die "Umgebung" abgegeben werden können, ist ein Zwischenbehälter 225 von in der Regel vergleichsweise geringerem Fassungsvermögen (z. B. etwa 2,2 ltr.) als dem Kältemittelvorrat 215 vorgesehen. Er kann als Drucktank ausgestaltet sein. Aus dem Gasraum des Vorratsbehälters 215 gelangen die unter Druck stehenden nicht kondensierten Gase bei Öffnen eines Überströmventils 225A in Zwischenbehälter 225, dessen Innenraum sich zunächst etwa auf Umgebungsdruck oder; vorzugsweise, auf einem unter Umgebungsdruck liegenden Druckniveau befindet, welches durch den Verdichter 212, wie nachgehend erläutert, erzeugt werden kann. Eine vom Zwischenbehälter 225 zur Trennstufe 240 führende Verbindungsleitung 225G wird durch ein schaltbares Trennventil 225F geschlossen gehalten, so dass bei geöffnetem Überströmventil 225A die nicht kondensierten Gase so lange in den Zwischenbehälter 225 überströmen bis im wesentlichen ein Druckausgleich mit dem Gasraum des Vorratsbehälters 215 erreicht ist. Danach kann das Überströmventil 225A wieder geschlossen werden.

Um in dem Zwischenbehälter 225 die Kältemittelbestandteile auszukondensieren, wird sein Gasraum auf z. B. -30°Celsius gekühlt. Hierzu kann Kältemittel aus dem Kältemittelvorrat 215 über ein schaltbares Ventil 215G in eine Verdampferschlange 225B überführt werden. Das flüssige Kältemittel wird über das thermostatische Expansionsventil 220 entspannt. Das thermostatische Expansionsventil misst die Temperatur am Austritt der Verdampferschlange 225B an der Leistungsverbindung 225H und gewährleistet eine leichte Überhitzung des Kältemittels. Die dabei verdampften Kältemittelgase können über ein Rückschlagventil 225H und die Leitung 225G zum Verdichter 212 gelangen, um nach Verdichtung über den Verflüssiger 215A wieder zurück in die Flüssigphase des Vorratsbehälters 215 gespeist zu werden. Das aus den nicht kondensierten Gasen in dem Zwischenbehälter 225 auskondensierte Kältemittel bildet einen Flüssigkeitsspiegel innerhalb des Zwischenbehälters 225. Oberhalb dieses Flüssigkeitsspiegels befinden sich im wesentlichen nur noch nicht kondensierbare Gase, wie insbesondere Luft.

Es ist nun auf verschiedene Weise möglich, die gesondert vorliegenden Flüssig- und Gasvolumina aus dem Zwischenbehälter 225 zu entfernen. Eine Möglichkeit besteht darin, einen sich in der Gasphase bildenden Überdruck gegenüber dem Umgebungsdruck auszunutzen und die Gasphase über ein schaltbares Ablassventil 225C an die Umgebung zu entlassen. Ein geringfügiger Restdruck von z.B. 1,1 bar absolut in der Gasphase des Zwischenbehälters 225 sollte, vorzugsweise, nicht unterschritten werden, um ein Eintreten nichtkondensierbarer Gase von außen in den Gasraum des Zwischenbehälters 225 möglichst zu vermeiden. Nach Schließen des Ablaßventils 225C befinden sich dann deutlich weniger kondensierbare Gase in dem Zwischenbehälter 225 als zuvor.

Es ist möglich, das kondensierte Kältemittel aus dem Zwischenbehälter 225 nach unten abströmen zu lassen, um es nachfolgend in der Leitung 225G und/oder im Wärmeaustauscher 242 zu verdampfen. Es ist auch möglich, das kondensierte Kältemittel (wie nicht dargestellt) vom unteren Ende des Zwischenbehälters 225 direkt in den Kältemittelvorrat 215 abfließen zu lassen. Hierzu muß Zwischenbehälter 225C sich auf einem entsprechenden Höhenniveau befinden. Dieses Überströmen kann von einem Magnetventil gestartet und beendet werden (nicht dargestellt).

Alternativ kann das in dem Zwischenbehälter 225 kondensierte Kältemittel nach dem Ablassen der nicht kondensierbaren Gase unmittelbar in dem Zwischenbehälter 225 verdampft werden. Hierzu kann ein Heizelement 225D auf der Oberfläche des ansonsten vorzugweise wärmeisolierten Zwischenbehälters 225 dienen. Auf diese Weise gelangt das Kältemittel, insbesondere als Naßdampf, über die Leitungen 225G und den Wärmeaustauscher 242 in den Verdichter 212, wie weiter oben beschrieben, in den Kältemittel-Vorratsbehälter 215.

**BEZUGSZEICHENLISTE**

| | | | |
|---|---|---|---|
| | | 26A | Niederdruckmanometer |
| 1 | Kompressor | 26B | Hochdruckmanometer |
| 2 | Verdampfer | 119 | Wiederauffüllsystem |
| 3 | Verflüssiger | 109A | Service-Anschlussverbinder |
| 4A-C | Rohrleitungen | 109B | Service-Anschlussverbinder |
| 5 | Abscheider | 111A | Druckschläuche |
| 6A/B | Serviceanschlüsse | 111B | Druckschläuche |
| 7 | Kaltluftgebläse | 112 | Verdichter |
| 8 | Warmluftgebläse | 112A | Kompressornotausventil |
| 9A/B | Service-Anschlussverbinder | 112B | Ölseparator |
| 10 | Fahrzeugklimaanlage | 112C | Kapillarrohr |
| 11A/B | Druckschläuche | 112D | Magnetventil |
| 12 | Absaugpumpe | 113 | Vakuumpumpe |
| 13 | Vakuumpumpe | 114 | Grobfilter |
| 14 | Separator | 115 | Kältemittelvorrat |
| 15 | Kältemittelvorrat | 115A | Kältemittelverflüssiger |
| 15A | Kältemittelverflüssiger | 115B | Ventil |
| 16 | Altölbehälter | 115C | Hanhabe |
| 17A-J | Wägeeinrichtungen | 115D | Rückschlagventil |
| 18 | Entlastungseinrichtung | 115E | Steigrohr |
| 19 | Wiederauffüllsystem | 115F | Ventil |
| 19A | Steuereinheit mit Ventilblock | 115G | Verbindungsleitung |
| 19B | Steuerleitungen | 116 | Altölbehälter |
| 19C | Vorratsbehälter | 116A | Ölablassventil |
| 19D | Vorratsbehälter | 117A | Wägeeinrichtung |
| 19E | Fernanzeige | 117B | Wägeeinrichtung |
| 19F' | Dosier- und Ventileinheit | 117C | Wägeeinrichtung |
| 19F" | Dosier- und Ventileinheit | 117D | Wägeeinrichtung |
| 19F'" | Dosier- und Ventileinheit | 119 | Wiederauffüllsystem |
| 20 | Service-Gerät | 119C | Spender |
| | | 119D | Spender |
| 126A | Niederdruckmanometer | 215F | Mehrwege-Ventil |
| 126B | Hochdruckmanometer | 215G | Schaltventil |
| 129 | Verbindungsschlauch | 215G' | Ausgang |
| 130 | erster Umschalt-Ventilblock | 216A | Ölablassventil |
| 131 | Drucksensor | 220 | Regelbares Ventil |
| 140 | Trennstufe | 220' | Eingang Verdampferschlange |
| 141 | Konstantdruckventil | 225 | Zwischen-Behälter |
| 142 | Doppelmantel-Wärmeaustauscher | 225A | Überströmventil |
| | | 225A' | Ausgang |
| 142A | Innenbehälter | 225B | Verdampferschlange |
| 142B | Außenbehälter | 225C | Ablassventil |
| 142C | Heizwendel | 225C' | Erster Ausgang |
| 142D | Ventilblock | 225D | Heizelement |
| 143 | Verbindungsleitung | 225E | Leitung |
| 146 | Gastrockner | 225E' | Eingang |
| 146A | Leitung | 225F | Trennventil |
| 150 | Vakuumeinheit | 225F' | Zweiter Ausgang |
| 151 | zweiter Umschalt-Ventilblock | 225G | Leitung |
| 151A | Druckschalter | 225H | Rückschlagventil |
| 212 | Verdichter | 225H' | Ausgang |
| 212A | Kompressornotausventil | 226A | Gaszone |
| 212B | Ölseparator | 226B | Flüssigzone |
| 212C | Kapillarrohr | 240 | Trennstufe |
| 212D | Magnetventil | 242 | Wärmeaustauscher |
| 215 | Kältemittelvorrat | 242C | Heizwendel |
| 215A | Kältemittelverflüssiger | 242D | Ventilblock |
| 215D | Rückschlagventil | 246 | Gastrockner |
| 215E | Steigrohr | 246A | Leitung |

## Patentansprüche

1. Service-Gerät zum Warten von Fahrzeugklimaanlagen, insbesondere zum Austauschen eines Kältemittel/Kompressoröl-Gemisches, mit einem Kältemittelvorrat (215) und mit einer, den Kältemittelvorrat speisenden Trennstufe (240) zum Trennen von Kältemittel und nicht kondensierbaren Gasen von Kompressoröl, wobei
das Service-Gerät eine weitere, von dem Kältemittelvorrat (215), insbesondere von dessen Gasphase, gespeiste Trennstufe mit einem Zwischenbehälter (225) zum Trennen von Kältemittel von nicht-kondensierbaren Gasen umfasst,
**dadurch gekennzeichnet, dass**
der Zwischenbehälter (225) Mittel zum Kühlen zur Kondensation des Kältemittels aufweist.

2. Service-Gerät nach Anspruch 1, **dadurch gekennzeichnet, dass** der Kältemittelvorrat (215) einen oben gelegenen Ausgang (225A') für ein Kältemittel/nicht-kondensierbare-Gase-Gemisch aus dem Kältemittelvorrat (215) aufweist, der über eine, vorzugsweise absperrbare, Leitung (225E) mit einem Eingang (225E') des Zwischenbehälters (225) für das Kältemittel/nicht-kondensierbare-Gase-Gemisch aus dem Kältemittelvorrat (215) verbunden ist.

3. Service-Gerät nach Anspruch 1 oder 2 **dadurch gekennzeichnet, dass** der Zwischenbehälter (225) einen ersten, vorzugsweise im oberen Bereich des Zwischenbehälters (225) angeordneten, absperrbaren.Ausgang (225C') für die nicht-kondensierbaren Gase zur Umgebung und einen zweiten, vorzugsweise im unteren Bereich des Zwischenbehälters (225) angeordneten, absperrbaren Ausgang (225F') für das Kältemittel umfasst.

4. Service-Gerät nach Anspruch 3, **dadurch gekennzeichnet, dass** der zweite Ausgang (225F') mit der ersten Trennstufe (240) und/oder dem Kältemittelvorrat (215) und/oder der Fahrzeugklimaanlage und/oder einem zweiten Kältemittelvorrat verbunden oder verbindbar ist.

5. Service-Gerät nach einem der Ansprüche 1 bis 4, **dadurch gekennzeichnet, dass** der Zwischenbehälter (225) einen Eingang (220') und einen Ausgang (225H') aufweisende, mit einem Ausgang (215G') des Kältemittelvorrats (215) verbindbarer Verdampferschlange (225B) umfasst.

6. Service-Gerät nach Anspruch 5, **dadurch gekennzeichnet, dass** der Ausgang (225H') der Verdampferschlange (225B) mit einem zweiten Ausgang (225F') des Zwischenbehälters (225) verbindbar ist.

7. Service-Gerät nach einem der Ansprüche 3 bis 6, **dadurch gekennzeichnet, dass** der erste Ausgang (225C') des Zwischenbehälters (225) steuerbar ist und/oder einen Öffnungsschwelldruck von 1,01bar bis 2bar, vorzugsweise von 1,03bar bis 1,3 bar und besonders vorzugsweise von 1,05 bar bis 1,15 bar aufweist.

8. Verfahren zum Betreiben eines Servicegerätes zum Warten einer Fahrzeugklimaanlage, bei dem
- ein Kältemittel/nicht-kondensierbare-Gase/Kompressoröl-Gemisch der Fahrzeugklimaanlage in das Service-Gerät, insbesondere in ein Service-Gerät nach einem der Ansprüche 1 bis 7, geleitet wird,
- das Kompressoröl des Gemischs in einer ersten Trennstufe (240) des Service-Geräts abgeschieden wird,
- das vom Kompressoröl befreite Kältemittel/nicht-kondensierbare-Gase-Gemisch in einem Kältemittelvorrat (215) gesammelt wird,
- zumindest ein Teil des Kältemittel/nicht-kondensierbare-Gase-Gemisches aus dem Kältemittelvorrat (215) in einen Zwischenbehälter (225) geleitet wird,
**dadurch gekennzeichnet, dass**
- das gasförmige Kältemittel im Zwischenbehälter (225), vorzugsweise mittels Verdampfens von flüssigem Kältemittel, bis zur zumindest weitgehenden Kondensation abgekühlt wird.

9. Verfahren nach Anspruch 8, **dadurch gekennzeichnet, dass** zumindest ein Teil der nicht-kondensierbaren Gase nach der Kondensation des Kältemittels im Zwischenbehälter (225) durch Überdruck an die Umgebung abgegeben wird.

10. Verfahren nach Anspruch 8 oder 9, **dadurch gekennzeichnet, dass** das kondensierte Kältemittel im Zwischenbehälter (225) durch Schwerkraft und/oder Überdruck aus dem Zwischenbehälter (225) geleitet oder nach vorangegangenem Ableiten nicht kondensierter Gase zumindest teilweise verdampft und nachfolgend durch Überdruck und/oder durch Absaugen aus dem Zwischenbehälter entfernt wird.

## Claims

1. A service device for maintaining vehicle air conditioning systems, especially for replacing a refrigerant/compressor oil mixture, said service device having a refrigerant reservoir (215) and a separation stage (240) that feeds the refrigerant reservoir and separates refrigerant and non-condensable gases from compressor oil, wherein
the service device comprises a further separation stage with an intermediate container (225) that is fed by the refrigerant reservoir (215), especially by its gas phase, for separating refrigerant from non-condensable gases,
**characterized in that**
the intermediate container (225) has cooling means to condensate the refrigerant.

2. The service device according to claim 1, **characterized in that** the refrigerant reservoir (215) has an upper outlet (225A') for a refrigerant/non-condensable gas mixture from the refrigerant reservoir (215) that is connected to an inlet (225E') of the intermediate container (225) for the refrigerant/non-condensable gas mixture from the refrigerant reservoir (215) via a tube (225E) that is preferably closable.

3. The service device according to claim 1 or 2, **characterized in that** the intermediate container (225) comprises a first outlet (225C') for the non-condensable gases to the environment that is preferably disposed in the upper part of the intermediate container (225) and closable and a second outlet (225F) for the refrigerant that is preferably disposed in the lower part of the intermediate container (225) and closeable.

4. The service device according to claim 3, **characterized in that** the second outlet (225F) is or can be connected to a first separation stage (240) and/or the refrigerant reservoir (215) and/or the vehicle air conditioning system and/or a second refrigerant reservoir.

5. The service device according to any of claims 1 to 4, **characterized in that** the intermediate container (225) comprises an evaporator coil (225B) that has an inlet (220') and an outlet (225H') and can be connected to an outlet (215G') of the refrigerant reservoir (215).

6. The service device according to claim 5, **characterized in that** the outlet (225H') of the evaporator coil (225B) can be connected to a second outlet (225F') of the intermediate container (225).

7. The service device according to any of claims 3 to 6, **characterized in that** the first outlet (225C') of the intermediate container (225) can be controlled and/or has an opening threshold pressure of 1.01 bar to 2 bar, preferably 1.03 bar to 1.3 bar and particularly preferred 1.05 bar to 1.15 bar.

8. A method for operating a service device for maintaining a vehicle air conditioning system, wherein
- a refrigerant/non-condensable gas/compressor oil mixture of the vehicle air conditioning system is passed into the service device, especially into a service device according to any of claims 1 to 7,
- the compressor oil of the mixture is separated in a first separation stage (240) of the service device,
- the refrigerant/non-condensable gas mixture freed from the compressor oil is collected in a refrigerant reservoir (215),
- at least a part of the refrigerant/non-condensable gas mixture is passed out of the refrigerant reservoir (215) into an intermediate container (225),
**characterized in that**
- the gaseous refrigerant in the intermediate container (225) is cooled, preferably by means of evaporating liquid refrigerant, until at least substantial condensation.

9. The method according to claim 8, **characterized in that** at least a part of the non-condensable gases upon condensation of the refrigerant in the intermediate container (225) is released into environment by excessive pressure.

10. The method according to claim 8 or 9, **characterized in that** the condensed refrigerant in the intermediate container (225) is passed out of the intermediate container (225) by gravity and/or excessive pressure, or is at least partially evaporated after previous withdrawal of noncondensed gases and subsequently is removed from the intermediate container by excessive pressure and/or by suction.

## Revendications

1. Appareil de maintenance destiné à effectuer l'entretien de systèmes de climatisation de véhicule, en particulier à échanger un mélange de réfrigérant/ huile de compresseur, comportant un réservoir de réfrigérant (215) et un étage de séparation (240) qui est destiné à alimenter le réservoir de réfrigérant et à séparer le réfrigérant et les gaz non-condensables de l'huile de compresseur,
l'appareil de maintenance comprenant un autre étage de séparation qui est alimenté par le réservoir de réfrigérant (215), en particulier la phase gazeuse de celui-ci, et qui comprend un récipient intermédiaire (225) destiné à séparer le réfrigérant des gaz non-condensables,
**caractérisé en ce que**
le récipient intermédiaire (225) comprend des moyens de refroidissement destinés à condenser le réfrigérant.

2. Appareil de maintenance selon la revendication 1, **caractérisé en ce que** le réservoir de réfrigérant (215) comprend une sortie (225 A), située en dessus, pour un mélange de réfrigérant/ gaz non-condensables du récipient intermédiaire (225), ladite sortie étant raccordée par une conduite (225E), qui de préférence est obturable, à une entrée (225E') du récipient intermédiaire (225) pour le mélange de réfrigérant/ gaz non-condensables du récipient intermédiaire (225).

3. Appareil de maintenance selon la revendication 1 ou 2, **caractérisé en ce que** le récipient intermédiaire (225) comprend une première sortie (225C') à l'environnement pour les gaz non-condensables, qui est obturable et de préférence située dans la zone supérieure du récipient intermédiaire (225), et une deuxième sortie (225F') pour le réfrigérant, qui est obturable et de préférence située dans la zone inférieure du récipient intermédiaire (225).

4. Appareil de maintenance selon la revendication 3, **caractérisé en ce que** la deuxième sortie (225F') est raccordée, ou peut être raccordée, au premier étage de séparation (240) et/ou au réservoir de réfrigérant (215) et/ou au système de climatisation de véhicule et/ou à un deuxième réservoir de réfrigérant.

5. Appareil de maintenance selon l'une quelconque des revendications 1 à 4, **caractérisé en ce que** le récipient intermédiaire (225) comprend un serpentin évaporateur (225B) qui comprend une entrée (220') et une sortie (225H') et peut être raccordé à la sortie (215G') du réservoir de réfrigérant (215).

6. Appareil de maintenance selon la revendication 5, **caractérisé en ce que** la sortie (225H') du serpentin évaporateur (225B) peut être raccordée à une deuxième sortie (225F') du récipient intermédiaire (225).

7. Appareil de maintenance selon l'une quelconque des revendications 3 à 6, **caractérisé en ce que** la première sortie (225C') du récipient intermédiaire (225) est susceptible à être commandée et/ou comporte une pression seuil d'ouverture comprise entre 1,01 bar et 2 bar, de préférence entre 1,03 bar et 1,3 bar, et de façon particulièrement préférée entre 1,05 bar et 1,15 bar.

8. Procédé pour faire fonctionner un appareil de maintenance destiné à effectuer l'entretien de systèmes de climatisation de véhicule, dans lequel
- on introduit un mélange de réfrigérant/ gaz non-condensables/ huile de compresseur du système de climatisation de véhicule dans l'appareil de maintenance, en particulier dans un appareil de maintenance selon l'une quelconque des revendications 1 à 7,
- dans un premier étage de séparation (240) de l'appareil de maintenance, on sépare l'huile de compresseur du mélange,
- dans un réservoir de réfrigérant (215), on recueille le mélange de réfrigérant/ gaz non-condensables qui est débarrassé de l'huile de compresseur,
- on introduit au moins une partie du mélange de réfrigérant/ gaz non-condensables du réservoir de réfrigérant (215) dans un récipient intermédiaire (225),
**caractérisé en ce que**
- on refroidit le réfrigérant, qui est en phase gazeuse, dans le récipient intermédiaire (225) jusqu'à ce que sa condensation soit réalisée au moins dans une large mesure, de préférence par vaporisation de réfrigérant de phase liquide.

9. Procédé selon la revendication 8, **caractérisé en ce qu'**au moins une partie des gaz non-condensables est déchargée dans l'environnement par surpression, après que le réfrigérant dans le récipient intermédiaire (225) a été condensé.

10. Procédé selon la revendication 8 ou 9, caractérisé en ce le réfrigérant condensé dans le récipient intermédiaire (225) est déchargé du récipient intermédiaire (225) par la gravité et/ou par surpression, ou il est, après un déchargement préalable des gaz non-condensés, au moins en partie vaporisé et ensuite éliminé du récipient intermédiaire par surpression et/ou aspiration.
